# FASCICULE DE BREVET EUROPEEN

(11) **EP 2 001 103 B1**
(45) Date de publication et mention de la délivrance du brevet: **13.08.2014**
(21) Numéro de dépôt: 08157308.1
(22) Date de dépôt: 30.05.2008
(51) Int. Cl.: H02J 13/00, H04B 1/16, H04M 19/08, B60R 16/03

(54) **Dispositif de commande de la mise sous tension d'un boîtier télématique, système télématique et procédé de commande correspondants**
Regler für die Spannungszuschaltung zu einem Telematikschaltkasten, entsprechendes Telematiksystem und entsprechendes Regelungsverfahren
Device for controlling the powering of a telematic box, corresponding telematic system and control method

(30) Priorité: 05.06.2007 FR 0755463
(43) Date de publication de la demande: 10.12.2008
(73) Titulaire: PEUGEOT CITROËN AUTOMOBILES SA, 78140 Velizy-Villacoublay (FR)
(72) Inventeur: Steinmetz, Jean Gabriel, 75011, PARIS (FR)
(74) Mandataire: Vigand, Régis Louis Michel

(56) Documents cités:
- EP-A- 0 639 486
- EP-A- 1 550 584
- GB-A- 2 396 729
- US-A1- 2003 190 030

## Description

### Dispositif de commande de la mise sous tension d'un boitier télématique, système télématique et procédé de commande correspondants

La présente invention concerne un dispositif de commande de la mise sous tension d'un boîtier télématique embarqué dans un véhicule automobile, ledit dispositif comprenant des moyens de mise sous tension par intermittence du boîtier télématique lorsque le véhicule est à l'arrêt.

Le document US 2003/0190030 A divulgue le préambule de la revendication 1.

L'invention concerne plus particulièrement le domaine des services télématiques embarqués dans des véhicules automobiles.

De tels services utilisent généralement un boîtier télématique situé à l'intérieur du véhicule et alimenté électriquement à partir de la batterie du véhicule. Pour que le service télématique correspondant puisse être rendu correctement, il est souvent nécessaire que le boîtier télématique soit allumé et enregistré sur un réseau de communication permettant de communiquer avec le boîtier alors que le véhicule dans lequel il se trouve est lui-même à l'arrêt.

Ceci est notamment le cas pour le service de préconditionnement de l'habitacle qui permet à un conducteur, grâce à une commande à distance, de mettre en route le chauffage de l'habitacle et dégivrer les vitres avant qu'il ne rentre lui-même dans le véhicule.

Cependant, il est évident que le maintien de l'alimentation d'un organe électronique du véhicule pose un problème de consommation électrique qui peut entraîner une décharge complète de la batterie du véhicule et un problème de non démarrage du véhicule.

Pour remédier à ce problème, une solution classique consiste à ne pas maintenir le boîtier télématique sous tension de manière permanente lorsque le véhicule est arrêté mais de l'allumer périodiquement, pour une durée limitée, afin d'obtenir une faible consommation moyenne.

Cette solution bien qu'elle permette de réduire les risques de décharge de la batterie, ne les fait pas disparaître.

Le but de l'invention est de réduire encore plus les probabilités de décharge de la batterie.

A cet effet, l'invention a pour objet un dispositif de commande de la mise sous tension d'un boîtier télématique embarqué dans un véhicule automobile, ledit dispositif comprenant des moyens de mise sous tension par intermittence du boîtier télématique lorsque le véhicule est à l'arrêt, caractérisé en ce qu'il comprend :
- des moyens de détection de la présence d'un réseau de communication permettant une communication vers ou depuis le boîtier télématique ; et
- des moyens d'inhibition des moyens de mise sous tension par intermittence de sorte que le boîtier télématique n'est pas alimenté lorsque les moyens de détection ne détectent pas la présence dudit réseau de communication et est alimenté lorsque les moyens de détection détectent la présence dudit réseau de communication.

L'invention a également pour objet un système télématique comprenant un boîtier télématique embarqué dans un véhicule automobile, caractérisé en ce qu'il comprend un dispositif de commande de la mise sous tension du boîtier télématique du type précité.

Suivant des modes particuliers de réalisation, le système comporte l'une ou plusieurs des caractéristiques suivantes :
- le boîtier télématique comprend des moyens d'enregistrement du boîtier télématique sur ledit réseau de communication,
- ledit boîtier télématique est équipé de moyens de transmission propres à transmettre des données suivant la norme GSM,
- ledit boîtier télématique est un boîtier de commande à distance de préconditionnement du véhicule.

L'invention a aussi pour objet un procédé de commande de la mise sous tension d'un boîtier télématique embarqué dans un véhicule automobile, ledit procédé comprenant une étape de mise sous tension par intermittence du boîtier télématique lorsque le véhicule est à l'arrêt, caractérisé en ce qu'il comprend :
- une étape de détection de la présence d'un réseau de communication permettant une communication vers ou depuis le boîtier télématique ; et
- une étape d'inhibition de la mise sous tension par intermittence de sorte que le boîtier télématique n'est pas alimenté lorsque la détection de la présence dudit réseau échoue et est alimenté lorsque la détection de la présence dudit réseau réussit.

L'invention sera mieux comprise à la lecture de la description qui va suivre, donnée uniquement à titre d'exemple et faite en se référant aux dessins joints sur lesquels :
- la figure 1 est un schéma synoptique illustrant la structure du système télématique, selon l'invention, et
- la figure 2 est un organigramme illustrant le fonctionnement du procédé de mise sous tension d'un boîtier télématique, selon l'invention.

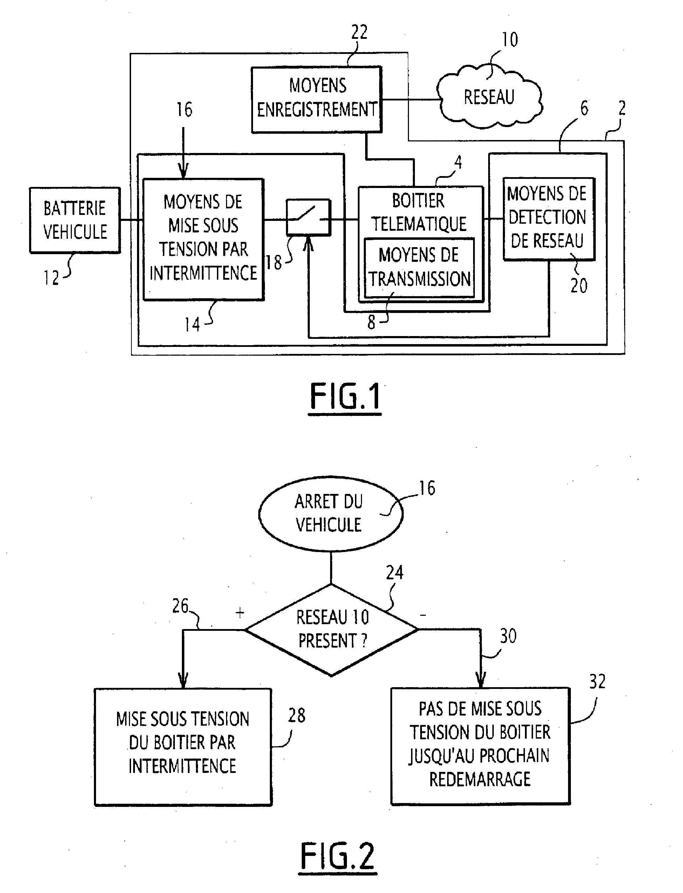

Sur la figure 1 est représenté un système télématique 2 embarqué dans un véhicule automobile. Ce système télématique 2 comprend un boîtier télématique 4 et un dispositif de commande 6 de la mise sous tension du boîtier télématique 4, selon l'invention.

Le boîtier télématique 4 permet, à titre d'exemple, de supporter le service de commande à distance du préconditionnement de l'habitacle du véhicule. Il est équipé de moyens de transmission 8 propres à transmettre des données sur un réseau 10. Le réseau 10 est, par exemple, un réseau de téléphonie mobile de type GSM.

Par ailleurs, le boîtier télématique 4 est alimenté à l'aide d'une batterie 12 du véhicule.

Selon l'invention, le dispositif de commande 6 de la mise sous tension du boîtier télématique 4 comprend des moyens de mise sous tension par intermittence 14 du boîtier télématique 4 lorsque le véhicule est à l'arrêt, comme indiqué par la flèche 16. Le dispositif de commande 6, comprend par ailleurs des moyens d'inhibition 18 des moyens de mise sous tension par intermittence 14.

Les moyens d'inhibition 18 comprennent par exemple un interrupteur commandable.

En outre, le dispositif de commande 6 comprend des moyens de détection 20 de la présence du réseau 10 propres à commander les moyens d'inhibition 18 des moyens de mise sous tension par intermittence 14.

Enfin, il est prévu dans le système télématique 2, des moyens d'enregistrement 22 du boîtier télématique 4 sur le réseau de communication 10.

Selon un mode de réalisation particulier de l'invention, les moyens d'enregistrement 22 du boîtier télématique 4 sur le réseau 10 sont confondus avec les moyens de transmission 8.

Le fonctionnement du système télématique 2 selon l'invention est décrit dans la suite de la description en référence aux figures 1 et 2.

L'invention concerne particulièrement la situation dans laquelle le véhicule automobile est à l'arrêt dans une zone de stationnement donnée. Dans cette situation, les moyens de détection 20 détectent en 24 si le réseau 10 est présent dans la zone de stationnement ou non.

Si le réseau 10 est détecté en 26, les moyens de détection 20 agissent en 28 sur les moyens d'inhibition 18 des moyens de mise sous tension par intermittence 14 pour que le boîtier télématique 4 soit alimenté par intermittence à partir de la batterie 12 du véhicule. Ainsi, dans le cas où les moyens d'inhibition 18 comprennent un interrupteur commandable, les moyens de détection 20 commandent en 28 la fermeture de l'interrupteur.

Chaque mise sous tension par intermittence du boîtier télématique 4 est associée à l'enregistrement du boîtier 4 par les moyens d'enregistrement 22 sur le réseau 10.

Si le réseau de communication 10 n'est pas détecté en 30, les moyens de détection 20 agissent en 32 sur les moyens d'inhibition 18 des moyens de mise sous tension par intermittence 14 pour que le boîtier télématique 4 ne soit pas alimenté durant toute la durée de l'arrêt du véhicule. Ainsi, dans le cas où les moyens d'inhibition 18 comprennent un interrupteur commandable, les moyens de détection 20 commandent en 32 l'ouverture de l'interrupteur.

Ainsi, l'invention permet de réduire les probabilités d'occurrence d'une décharge de la batterie du véhicule grâce à la stratégie consistant à ne pas autoriser la mise sous tension du boîtier télématique lorsque le véhicule est stationné dans une zone où le réseau de communication utilisé par le boîtier n'est pas présent. Or, dans la pratique, une telle situation est très courante étant donné qu'une majorité de zones de stationnement est située dans des sous-sols où il est rare que le réseau de communication soit présent. La réduction des risques de décharge de la batterie escomptée par l'invention peut donc être significative par rapport aux solutions de l'état de la technique.

## Revendications

1. Dispositif de commande (6) de la mise sous tension d'un boîtier télématique (4) embarqué dans un véhicule automobile, ledit dispositif (6) comprenant des moyens de mise sous tension par intermittence (14) du boîtier télématique (4) lorsque le véhicule est à l'arrêt, **caractérisé en ce qu'**il comprend :
- des moyens de détection (20) de la présence d'un réseau de communication (10) permettant une communication vers ou depuis le boîtier télématique (4) ; et
- des moyens d'inhibition (18) des moyens de mise sous tension par intermittence (14) de sorte que le boîtier télématique (4) n'est pas alimenté lorsque les moyens de détection (20) ne détectent pas la présence dudit réseau de communication (10) et est alimenté lorsque les moyens de détection (20) détectent la présence dudit réseau de communication (10).

2. Système télématique (2) comprenant un boîtier télématique (4) embarqué dans un véhicule automobile, **caractérisé en ce qu'**il comprend un dispositif de commande (6) de la mise sous tension du boîtier télématique (4) selon la revendication 1.

3. Système (2) selon la revendication 2, **caractérisé en ce que** le boîtier télématique comprend des moyens d'enregistrement (22) du boîtier télématique (4) sur ledit réseau de communication (10).

4. Système (2) selon la revendication 2 ou 3, **caractérisé en ce que** ledit boîtier télématique (4) est équipé de moyens de transmission (8) propres à transmettre des données suivant la norme GSM.

5. Système (2) selon l'une quelconque des revendications 2 à 4, **caractérisé en ce que** ledit boîtier télématique (4) est un boîtier de commande à distance de préconditionnement du véhicule.

6. Procédé de commande de la mise sous tension d'un boîtier télématique (4) embarqué dans un véhicule automobile, ledit procédé comprenant une étape de mise sous tension par intermittence du boîtier télématique lorsque le véhicule est à l'arrêt, **caractérisé en ce qu'**il comprend :
- une étape de détection (24) de la présence d'un réseau de communication (10) permettant une communication vers ou depuis le boîtier télématique (4) ; et
- une étape d'inhibition de la mise sous tension par intermittence de sorte que le boîtier télématique (4) n'est pas alimenté lorsque la détection de la présence dudit réseau (10) échoue et est alimenté lorsque la détection de la présence dudit réseau (10) réussit.

## Patentansprüche

1. Steuerungseinrichtung (6) für die Spannungszuschaltung einer Telematikbox (4), die in ein Kraftfahrzeug eingebaut ist, wobei die Einrichtung (6) Mittel für die phasenweise Spannungszuschaltung (14) der Telematikbox (4) umfasst, wenn das Fahrzeug still steht, **dadurch gekennzeichnet, dass** sie Folgendes umfasst:
- Erfassungsmittel (20) des Vorhandenseins eines Kommunikationsnetzes (10), das eine Kommunikation zur oder von der Telematikbox (4) ermöglicht; und
- Unterdrückungsmittel (18) der Mittel für die phasenweise Spannungszuschaltung (14), so dass die Telematikbox (4) nicht versorgt wird, wenn die Erfassungsmittel (20) kein Vorhandensein des Kommunikationsnetzes (10) erfassen, und versorgt wird, wenn die Erfassungsmittel (20) das Vorhandensein des Kommunikationsnetzes (10) erfassen.

2. Telematiksystem (2), umfassend eine Telematikbox (4), die in ein Kraftfahrzeug eingebaut ist, **dadurch gekennzeichnet, dass** es eine Steuerungseinrichtung (6) für die Spannungszuschaltung der Telematikbox (4) nach Anspruch 1 umfasst.

3. System (2) nach Anspruch 2, **dadurch gekennzeichnet, dass** die Telematikbox Speichermittel (22) für die Telematikbox (4) im Kommunikationsnetz (10) umfasst.

4. System (2) nach Anspruch 2 oder 3, **dadurch gekennzeichnet, dass** die Telematikbox (4) mit Übertragungsmitteln (8) ausgestattet ist, die imstande sind, Daten gemäß GSM-Standard zu übertragen.

5. System (2) nach einem der Ansprüche 2 bis 4, **dadurch gekennzeichnet, dass** die Telematikbox (4) eine Fernsteuerungsbox zur Vorkonditionierung des Fahrzeugs ist.

6. Steuerungsverfahren für die Spannungszuschaltung einer Telematikbox (4), die in ein Kraftfahrzeug eingebaut ist, wobei das Verfahren einen Schritt der phasenweisen Spannungszuschaltung der Telematikbox umfasst, wenn das Fahrzeug still steht, **dadurch gekennzeichnet, dass** es Folgendes umfasst:
- einen Schritt des Erfassens (24) des Vorhandenseins eines Kommunikationsnetzes (10), das eine Kommunikation zur oder von der Telematikbox (4) ermöglicht; und
- einen Schritt des Unterdrückens der phasenweisen Spannungszuschaltung, so dass die Telematikbox (4) nicht versorgt wird, wenn das Erfassen des Vorhandenseins des Netzes (10) fehlschlägt, und versorgt wird, wenn das Erfassen des Vorhandenseins des Netzes (10) erfolgreich ist.

## Claims

1. Device (6) for controlling the powering up of a telematics box (4) on board a motor vehicle, said device (6) comprising means (14) for intermittent powering up of the telematics box (4) when the vehicle is stopped, **characterised in that** it comprises:
- means (20) for detecting the presence of a communication network (10) affording communication to or from the telematics box (4); and
- means (18) for inhibiting the intermittent powering-up means (14) so that the telematics box (4) is not supplied when the detection means (20) do not detect the presence of said communication network (10) and is supplied when the detection means (20) detect the presence of said communication network (10).

2. Telematics system (2) comprising a telematics box (4) on board a motor vehicle, **characterised in that** it comprises a device (6) for controlling the powering up of the telematics box (4) according to claim 1.

3. System (2) according to claim 2, **characterised in that** the telematics box comprises means (22) for registering the telematics box (4) on said communication network (10).

4. System (2) according to claim 2 or 3, **characterised in that** said telematics box (4) is equipped with transmission means (8) able to transmit data in accordance with the GSM standard.

5. System (2) according any one of claims 2 to 4, **characterised in that** said telematics box (4) is a box for the remote control of the advance air conditioning of the vehicle.

6. Method for controlling the powering up of a telematics box (4) on board a motor vehicle, said method comprising a step of intermittently powering up the telematics box when the vehicle is stopped, **characterised in that** it comprises:
- a step (24) of detecting the presence of a communication network (10) affording communication to or from the telematics box (4); and
- a step of inhibiting the intermittent powering up so that the telematics box (4) is not supplied when detection of the presence of said network (10) fails and is supplied when detection of the presence of said network (10) succeeds.
